# EUROPÄISCHE PATENTSCHRIFT

(11) **EP 0 817 694 B1**
(45) Veröffentlichungstag und Bekanntmachung des Hinweises auf die Patenterteilung: **05.12.2001**
(21) Anmeldenummer: 96909144.6
(22) Anmeldetag: 28.03.1996
(51) Int. Cl.: B23B 51/02, B23C 5/10, B23D 77/00, B23G 5/06, B23P 15/28

(54) **SCHNEIDWERKZEUG**
CUTTING TOOL
OUTIL DE COUPE

(30) Priorität: 30.03.1995 DE 19511828; 30.03.1995 DE 19511829; 31.01.1996 DE 29601653 U
(43) Veröffentlichungstag der Anmeldung: 14.01.1998
(60) Teilanmeldung: 01113733.8
(73) Patentinhaber: VILAB AG, CH-3014 Bern (CH); Gühring, Jörg, 72458 Albstadt (DE)
(72) Erfinder: Gühring, Jörg, 72458 Albstadt (DE); Cselle, Tibor, 72488 Sigmaringen (DE); Rechberger, Johann, 3014 Bern (CH)
(74) Vertreter: Winter, Brandl, Fürniss, Hübner, Röss, Kaiser, Polte Partnerschaft
(86) Internationale Anmeldenummer: EP9601374
(87) Internationale Veröffentlichungsnummer: WO9630148

(56) Entgegenhaltungen:
- DE-A- 3 730 378
- DE-C- 99 549
- GB-A- 660 129
- US-A- 4 826 365

## Beschreibung

Die Erfindung betrifft ein Schneidwerkzeug wie Bohrer, Fräser, Gewindebohrer, Reibahle oder Senker gemäß dem Oberbegriff des Patentanspruchs 1.

Zur Steigerung der Produktivität, Flexibilität, Fertigungsqualität und Wirtschaftlichkeit moderner Produktionseinrichtungen hat im wesentlichen der Einsatz numerisch gesteuerter Werkzeugmaschinen beigetragen. Durch die vielfältigen Möglichkeiten der Steuerungstechnik und Informationsverarbeitung sind Maschinenkonzepte entstanden, die für den Einsatz in automatischen Fertigungssystemen geeignet sind. Derartige Fertigungssysteme enthalten in der Regel Werkzeug- und Werkstückspeicher, automatische Wechseleinrichtungen und integrierte Meßstationen, so daß die vom Maschinenführer durchzuführenden manuellen Tätigkeiten auf ein Minimum reduziert sind. Sensoren zur Überwachung von Maschinenfunktionen und Prozeßzuständen, wie Werkzeugverschleiß und Werkzeugbruch sichern den automatischen Fertigungsablauf. Um die volle Leistungsfähigkeit derartiger Werkzeugmaschinen ausnutzen zu können, müssen parallel zur Werkzeugmaschinenentwicklung auch entsprechende Werkzeuge zur Verfügung gestellt werden, die eine Verlängerung der Standzeit und eine Erhöhung der Schnittgeschwindigkeiten erlauben, so daß die Fertigungszeiten auf ein Minimum reduzierbar sind. Bei modernen Bearbeitungsverfahren muß aber nicht zwangsweise die Erhöhung der Schnittgeschwindigkeit im Vordergrund stehen, sondern es kann bei bestimmten Anwendungsfällen, wie beispielsweise bei der Bearbeitung von Leichtmetallen angestrebt werden, auf Kühl- und Schmiermittel zu verzichten oder zumindest deren Einsatz zu reduzieren und dafür eine reduzierte Schnittgeschwindigkeit Inkauf zu nehmen.

Bei Werkzeugen mit geometrisch bestimmten Schneiden, wie beispielsweise Bohrer, Fräser, Reibahlen, Gewindebohrer, Senker etc. werden bevorzugterweise hochlegierte Werkzeugstähle, Hartmetalle, d.h. Sinterwerkstoffe aus metallischen Hartstoffen, wie beispielsweise Cermet, Schneidkeramik, monokristallinem Diamant, polykristallinem Diamant, polykristallinem Bornitrid etc. als Schneidstoffe verwendet.

Des weiteren sind Werkzeuge bekannt, bei denen die Verschleißfestigkeit der Werkzeuge noch durch Beschichten mit Hartstoffschichten, wie beispielsweise Titannitrid, Titancarbid und Aluminiumoxid erhöht wird.

In der DE-OS 23 57 134 ist ein Schneidwerkzeug offenbart, bei dem ein Überzugsfilm aus Edelmetall durch ein Ionen-Plattierverfahren aufgebracht wird. Die DE-AS 1271495 betrifft ein Verfahren zur Herstellung eines Schneidwerkzeugs, bei dem vor einem Härtevorgang auf die nicht zu härtenden Abschnitte eine Deckschicht aus Kupfer oder Messing aufgetragen wird.

Die aus diesen beiden Druckschriften bekannten Schneidwerkzeuge haben den Nachteil gemeinsam, daß zum einen die Deckschichten aus vergleichsweise teureren Materialien bestehen und die Standzeiten, insbesondere bei der Verarbeitung von Leichtmetallen, verbesserungsfähig sind.

Die ständige Weiterentwicklung der Werkzeugmaschinen und der Einsatz neuartiger Verfahren, wie beispielsweise der Trockenbearbeitung, bei der die Werkstücke ohne den Einsatz von Kühl-/Schmiermitteln bearbeitet werden oder der Bearbeitung mit reduzierten Kühlmittelmengen und das Streben nach immer kürzeren Fertigungszeiten stellen an die Werkzeuge Anforderungen hinsichtlich der Standzeiten und maximal erreichbaren Schnittgeschwindigkeiten, denen herkömmliche Werkzeuge nicht in vollem Umfang genügen können.

Durch das Dokument DD-PS-202898 ist ein Schneidwerkzeug gemäss dem Oberbegriff des Patentanspruchs 1 bekannt geworden. Zur Erhöhung der Standzeit beispielsweise von Zerspanungswerkzeugen ist es hieraus bekannt, mittels Sputtern ein Hartstoff- und Festkörperschmierstoffschichtsystem aufzubringen, wobei der zuerst aufgebrachten Hartstoffschicht eine weiche Schicht, nämlich eine Schicht mit hexagonaler Gitterstruktur überlagert wird.

Aus dem Dokument US 5,002,798 ist ein Verfahren zur Ausbildung dünner Gleitschichten auf MoS₂-Basis bekannt, wobei auch hier unter der weichen Schicht eine Hartschicht vorgesehen sein kann.

Durch die weiche Gleitschicht soll der Werkzeugverschleiss verringert werden, indem der Span an der weichen Gleitschicht abgleitet, womit gleichzeitig der Bildung einer Aufbauschneide vorgebeugt wird. Auch kann die Reibung zwischen Werkstück und Freifläche minimiert werden, so dass auch der Freiflächenverschleiss herabgesetzt ist.

Aufgabe der Erfindung ist es, ein Schneidwerkzeug gemäss dem Oberbegriff des Patentanspruchs 1 dahingehend weiterzubilden, dass bei einfachem Aufbau eine weiter verbesserte Standzeit bei höherer Schnittgeschwindigkeit bzw. bei reduzierter Kühlmittelzufuhr erzielbar ist.

Diese Aufgabe wird durch die Merkmale des Patentanspruchs 1 gelöst.

Durch die erfindungsgemässen Maßnahmen wird zusätzlich zu den Vorzügen der weichen Gleitschicht auf einer verschleissfesten Grundschicht die Spanbildung, der Spanabfluss und der Spanbruch derart günstig beeinflusst, dass sich selbst bei höheren Schnittgeschwindigkeiten und mit verringerter Kühlmittelzufuhr eine weitere Verbesserung der Standzeit des Werkzeugs erzielen lässt. Im einzelnen wird ein Entstehen langer Fließspäne verhindert, die den Arbeitsablauf, z.B. bei automatischen Werkzeugmaschinen stören und die Späneentsorgung erschweren. Bei den mit dem erfindungsgemässen Schneidwerkzeug entstehenden kurzen Bröckelspänen ist eine hohe Oberflächengüte bei leichter Entsorgbarkeit der Späne gewährleistet. Dabei ergibt sich der zusätzliche Vorteil, dass die Rillenstruktur bzw. die Struktur der Ausnehmungen bei der Nachbearbeitung die Zuführung von Kühl- und Schmiermittel zum Schneidbereich des Werkzeugs wesentlich erleichtert, so dass die Standfestigkeit der Schneide erhöht wird. Die Zerspanungsleistungen und Standzeiten des erfindungsgemässen Werkzeugs sind denjenigen herkömmlicher Werkzeuge weit überlegen, selbst wenn die Werkstücke trocken oder mit verminderter Kühlmittelzufuhr bearbeitet werden.

Ein besonders niedriger Werkzeugverschleiss wird erzielt, wenn die weiche Gleitschicht die Sulfide, Telenide, Telluride, wie z.B. MoS₂, NbS₂, TaS₂, WS₂, MoSe₂, NbSe₂, TaSe₂, WSe₂, MoTe₂, NbTe₂, WTe₂ oder Mischverbindungen enthält, wodurch insbesondere der Bildung einer Aufbauschneide vorgebeugt wird.

Um einen optimalen Zerspanungsvorgang zu gewährleisten, wird die weiche Gleitschicht nicht im Bereich der Schneide ausgebildet.

Besonders vorteilhaft ist es, wenn der Grundkörper des Schneidwerkzeugs aus HSS, Hartmetall, Cermet oder Keramik hergestellt ist, wobei die verschleissfeste, d.h. Grundschicht aus TiN, TiAlN, TiCN, Diamant oder ähnlichem besteht.

Je nach Anwendungsfall wird es bevorzugt, die Grundschicht in einer Dicke von 1 bis 10 µm und die Gleitschicht in einer Dicke von 0,01 bis 5 µm, während die Härte der Grundschicht zwischen 2000 und 10000 HV betragen sollte und die Gleitschicht eine Mohs-Härte von 1 bis 2 haben sollte.

Im Fall, dass die Schneide an der Stirnseite des Schneidwerkzeugs, wie z. B. bei Bohrern, Stirnfräsern, Senkern etc. ausgebildet ist, werden die Ausnehmungen vorteilhafterweise als Kreis- oder Spiralabschnitte auf der Freifläche ausgebildet, die etwa konzentrisch zur Schneidwerkzeugsachse angeordnet sind.

Die Spanbildung und die Kühl- und Schmiermittelzufuhr lassen sich weiter verbessern, indem jeder Rille eine Ausnehmung zugeordnet ist, so dass die Ausnehmung praktisch in Verlängerung einer Rille verläuft.

Bei besonderen Anwendungsfällen kann es vorteilhaft sein, die Rillen oder Ausnhemungen nur über einen Teilbereich der Spannut bzw. der Freifläche auszubilden.

Als besonders vorteilhaft hat es sich gezeigt, wenn die Breite und die Tiefe der Rillen und/oder der Ausnehmungen zwischen 0.01 bis 2 mm vorzugsweise zwischen 0.02 bis 0.5 mm betragen. Weitere vorteilhafte Weiterbildungen der Erfindung sind Gegenstand der übrigen Unteransprüche.

Bevorzugte Ausführungsformen der Erfindung werde im folgenden anhand schematischer Zeichnungen näher erläuterte

Es zeigen:
- Fig. 1: eine Darstellung des Schneidteils eines Spiralbohrers;
- Fig. 2: eine schematische Draufsicht auf eine Spitze eines Bohrwerkzeugs;
- Fig. 3: eine dreidimensionale Schnittdarstellung eines erfindungsgemäßen Schneidwerkzeuges;
- Fig. 4: eine Prinzipskizze zur Erläuterung der Spanbildung bei einem erfindungsgemäßen Schneidwerkzeug;
- Fig. 5: ein Diagramm, in dem ein herkömmliches Schneidwerkzeug einem erfindungsgemäßen Schneidwerkzeug gegenübergestellt ist und
- Fig. 6: ein Diagramm, in dem ein herkömmliches Schneidwerkzeug einem mit einer Gleitschicht versehenen Schneidwerkzeug gegenübergestellt ist.

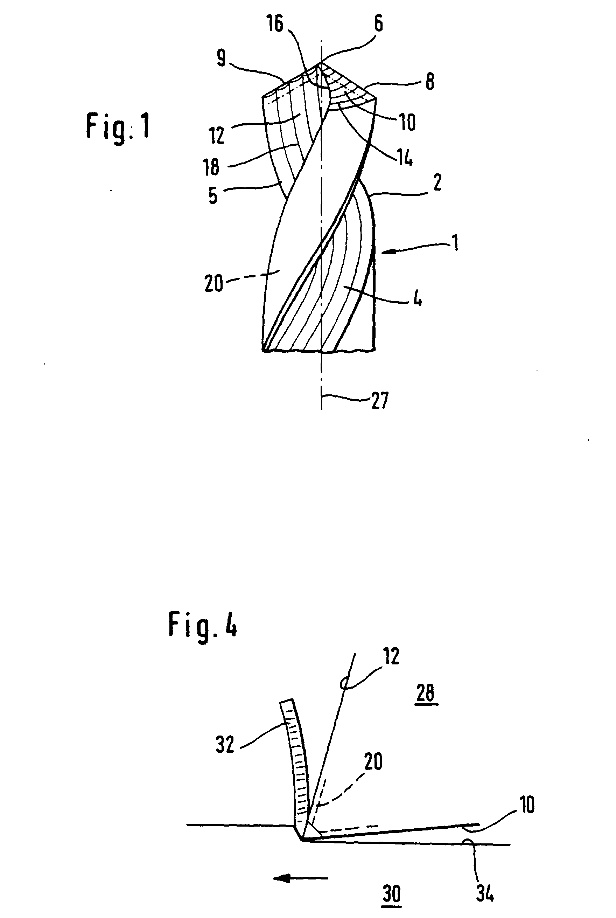

In Fig. 1 ist das Schneidteil 2 eines Spiralbohrers 1 dargestellt. Dieser hat zwei spiralförmige Spannuten 4, 5, die sich entlang des Schneidteils 2 bis zur Bohrerspitze 6 erstrecken. Jede Hauptschneide 8, 9 ist an einem Schneidkeil ausgebildet, der einerseits durch eine Freifläche 10 und andererseits durch eine Spanfläche 12 der Spannut 5 gebildet ist.

Des weiteren sind beim gezeigten Ausführungsbeispiel in der Freifläche 10 rillenförmige Ausnehmungen 14 ausgebildet, die sich konzentrisch von der Hauptschneide 8 (9) hin zur Hinterkante 16 der Freifläche erstrecken.

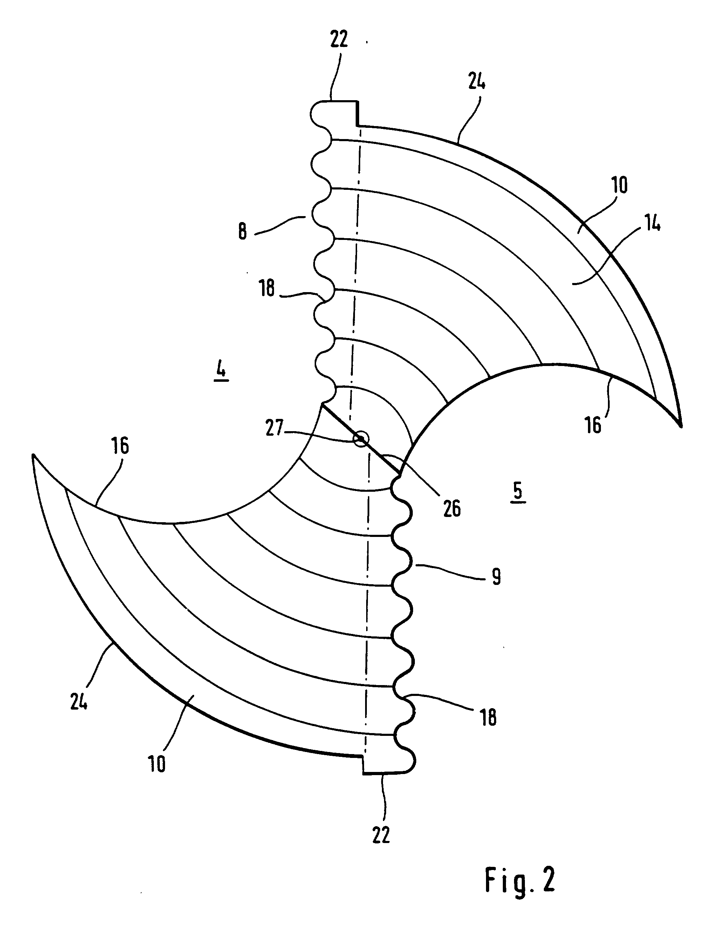

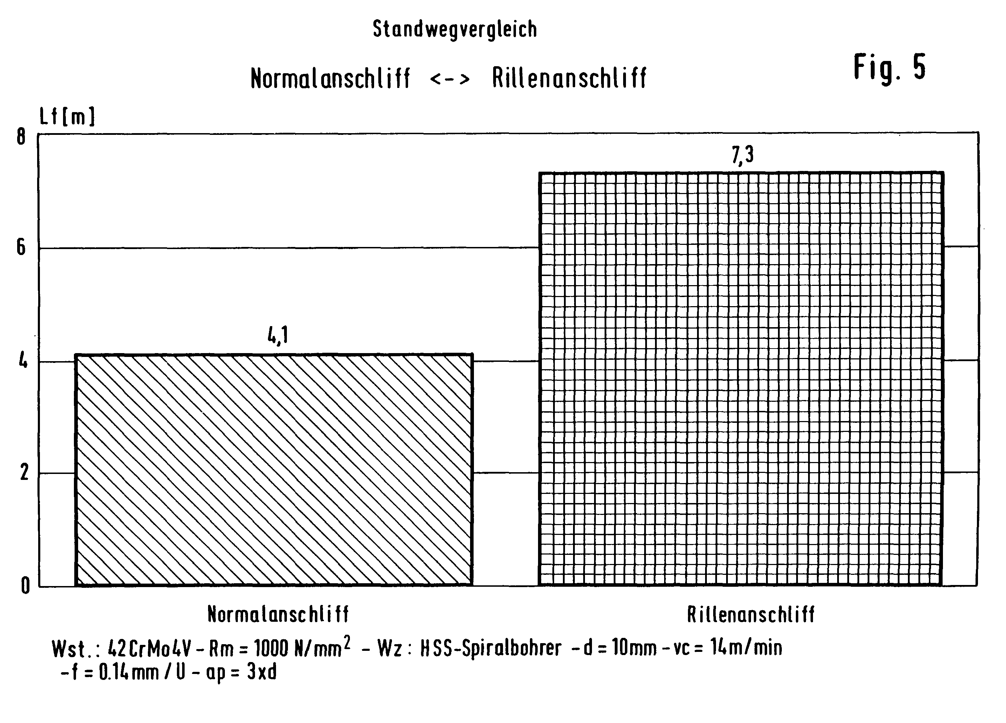

In jeder Spannut 4, 5 ist eine Vielzahl von nebeneinanderliegenden Rillen 18 ausgebildet, deren Achse etwa parallel zur Achse der Spannut 5 (4) angeordnet ist, d.h. die Rillen 18 erstrecken sich ebenfalls spiralförmig um die Achse 20 des Bohrers 1. Hinsichtlich weiterer Einzelheiten zur Ausbildung der Rillen 18 und der Ausnehmungen 14 sei auf die Fig. 2 und 5 verwiesen.

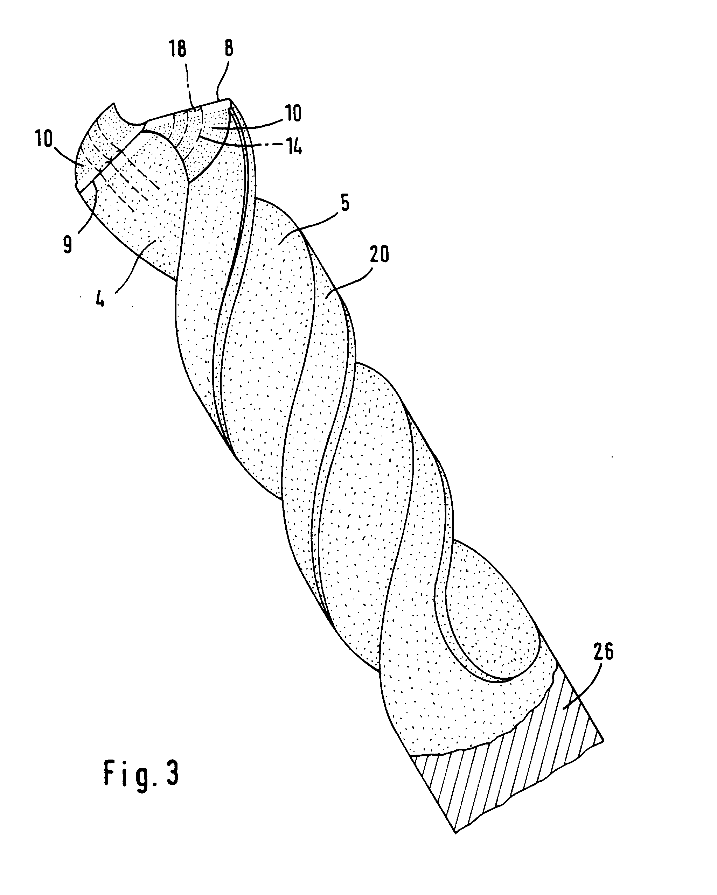

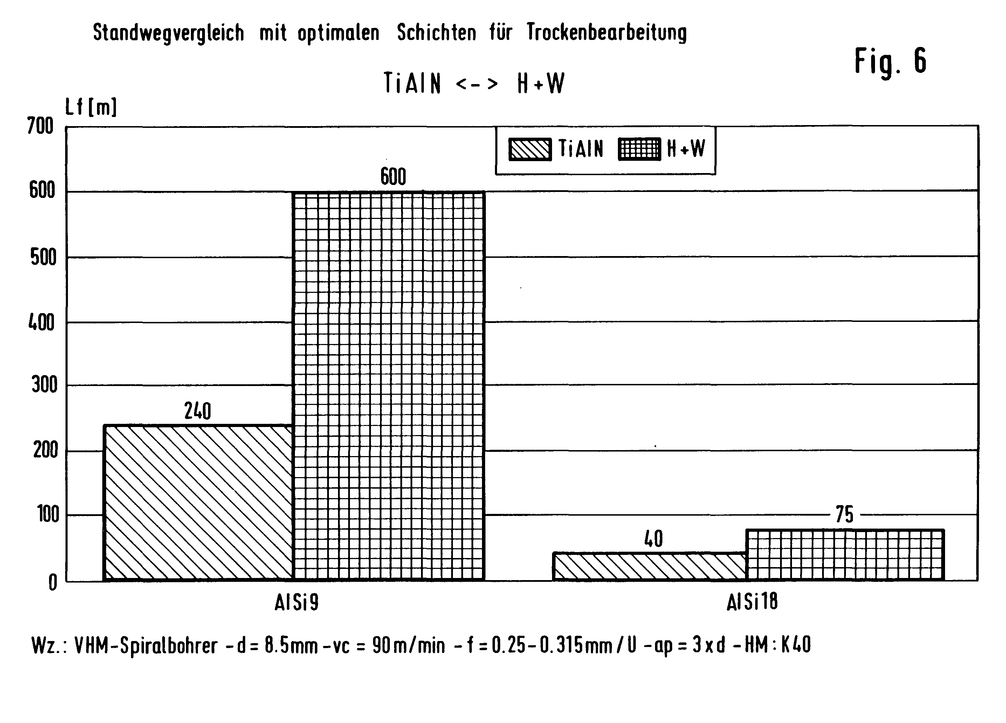

Wie weiterhin in Fig. 1 mit strichpunktierten Linien angedeutet ist, ist der Bohrer 1 und insbesondere das Schneidteil 2 mit einer Gleitschicht 20 beschichtet, die allerdings nicht im Bereich der Hauptschneiden 8, 9 ausgebildet ist. Die Gleitschicht 20 enthält vorzugsweise Sulfide, Selenide, Telluride, wie z.B. MoS₂, NbS₂, TaS₂, WS₂, MoSe₂, NbSe₂, TaSe₂, WSe₂, MoTe₂, NbTe₂, WTe₂ oder Mischverbindungen davon. Beim Auftragen dieser Gleitschicht 20 wurden die strichpunktiert angedeuteten Bereiche der Spitze 6 durch ein geeignetes Material abgedeckt, so daß die Hauptschneiden 8, 9 durch härteres Material gebildet sind. Hinsichtlich weiterer Details zu der Gleitschicht 20 sei auf die folgenden Fig. 3 und 6 verwiesen.

Fig. 2 zeigt eine schematisierte Draufsicht auf die Spitze 6 des Bohrers 1, wobei lediglich die Flächen der Bohrerspitze 6 dargestellt sind, während die außerhalb der Zeichenebene umlaufenden Nebenschneiden des Bohrers weggelassen wurden.

Wie aus dieser Darstellung hervorgeht, werden durch die beiden Spannuten 4, 5 die beiden Freiflächen 10 gebildet, die in der Darstellung nach Fig. 2 einerseits durch die Hauptschneiden 8 bzw. 9 und andererseits durch die Hinterkanten 16 begrenzt sind. Die radial außenliegende Begrenzung der Freiflächen 10 erfolgt durch die Nebenschneiden 22 und die Nebenfreiflächen 24. Die beiden Hauptschneiden 8, 9 sind durch die Querschneide 26 miteinander verbunden, die durch die Achse 27 des Bohrers 1 verläuft. Auf jeder Freifläche 10 sind, wie bereits vorstehend erwähnt, die Ausnehmungen 14 eingearbeitet, die beim gezeigten Ausführungsbeispiel als Kreis- oder Spiralabschnitte ausgebildet sind, die konzentrisch zur Achse 27 des Bohrers 1 ausgebildet sind. Die in Fig. 2 dargestellten Kreislinien stellen jeweils den Boden einer Ausnehmung 14 dar. Gemäß Fig. 2 sind des weiteren in den Spanflächen der Spannuten 4, 5 (senkrecht zur Zeichenebene) die Rillen 18 ausgebildet, die sich etwa senkrecht zur Zeichenebene entlang den Spannuten 4, 5 erstrecken. Sowohl die Rillen 18 als auch die Ausnehmungen 14 haben einen etwa wellenförmigen oder U-förmigen Querschnitt, so daß die Hauptschneiden 8, 9 wellenförmig ausgebildet werden. Die Tiefe und Breite der Rillen 18 und/oder der Ausnehmungen 14 beträgt je nach Einsatzfall etwa zwischen 0.01-2 mm, vorzugsweise 0.02-0.5 mm.

Die eingangs erwähnte Gleitschicht 20 ist im Bereich der Hauptschneiden 8, 9 nicht ausgebildet, so daß lediglich die Bereiche zwischen der strichpunktierten Linie in Fig. 2 und den Hinterkanten 16 der Freiflächen 10 mit der Gleitschicht 20 bedeckt sind.

Bei besonderen Anwendungsfällen kann es jedoch auch vorteilhaft sein, die Gleitschicht 20 auf die Schneiden 8, 9 zu erstrecken.

Durch die wellenförmige Ausbildung der Spanflächen 12 der Spannuten 4, 5 und der Freiflächen 10 wird das Zuführen von Kühl-/Schmiermittel- falls diese verwendet werden - hin zu den Hauptschneiden 8, 9 erheblich verbessert, so daß der Verschleiß des Bohrers 1 erheblich verringert werden kann oder aber eine Reduktion der Kühlmittelmenge erfolgen kann. Des weiteren führt die wellenförmige Struktur der Spannut zu einem früheren Spanbruch, so daß sich - wie bereits eingangs erwähnt - vergleichsweise kurze Bröckelspäne ausbilden, die eine hohe Oberflächengüte bei einer guten Abführbarkeit gewährleisten.

Die Überlegenheit dieses sogenannten "Rillenanschliffs" gegenüber den herkömmlichen Anschliffen ist in Fig. 5 verdeutlicht. Darin ist ein Standwegvergleich zweier Spiralbohrer dargestellt, von denen der eine mit einem Normalanschliff, d.h. mit einer ebenen Freifläche und einer ebenen Spanfläche oder Spannut versehen war, während das Vergleichswerkzeug mit dem erfindungsgemäßen Rillenanschliff an den Spannuten 4, 5 und den Freiflächen 14 versehen war. Mit beiden Bohrern wurde ein Werkstück aus 42CrMo4V bearbeitet, wobei beide Bohrer nicht mit der vorgenannten Gleitschicht 20 versehen waren. Beide Spiralbohrer hatten - abgesehen vom Rillenanschliff - identische geometrische Abmessungen und wurden mit der gleichen Schnittgeschwindigkeit v_{c}, dem gleichen Vorschub f und der gleichen Schnittiefe aₚ betrieben.

Wie aus der Fig. 5 entnehmbar ist, läßt sich allein durch Vorsehen des Rillenanschliffs gegenüber herkömmlichen Werkzeugen der Standweg ganz erheblich verbessern, so daß die Standzeiten und maximal erzielbaren Schnittgeschwindigkeiten der erfindungsgemäßen Werkzeuge insbesondere bei der Trockenbearbeitung oder bei der Bearbeitung mit reduzierter Kühl-/Schmiermittelmenge denjenigen herkömmlicher Werkzeuge überlegen sind.

In Fig. 3 ist eine dreidimensionale Darstellung eines Bohrwerkzeuges dargestellt, wobei der Übersichtlichkeit halber, die Rillen 18 in den Spannuten 4, 5 im Bereich der Hauptschneiden 8, 9 gestrichelt angedeutet sind. Die Ausnehmungen 14 in den Freiflächen 10 sind lediglich strichpunktiert angedeutet, da anhand der Fig. 3 die erfindungsgemäße Beschichtung des Bohrers 1 verdeutlicht werden soll.

Dessen Grundkörper kann beispielsweise aus herkömmlichem HSS-Stahl hergestellt werden, wobei entweder der gesamte Bohrer oder, wie in Fig. 3 angedeutet, lediglich das Schneidteil 2 mit einer harten Grundschicht 26 versehen werden. Diese Grundschicht 26 kann beispielsweise aus einem harten keramischen Material, wie TiN, TiAlN, TiCN oder aus Diamant etc. bestehen. Wie bereits eingangs erwähnt, soll der Einfachheit halber auf das verwendete PVD-Beschichtungsverfahren an dieser Stelle nicht eingegangen werden, sondern es wird auf die Fachliteratur und insbesondere auf die entsprechende Patentanmeldung der Firma VILAB verwiesen.

Die Grundschicht 26 erstreckt sich bis hin zu den Hauptschneiden 8, 9, wobei in Fig. 3 die die Grundschicht 26 andeutende Schraffur im Bereich der Hauptschneiden 8, 9 nicht vorgenommen wurde.

Auf der Grundschicht 26 ist die bereits erwähnte Gleitschicht 20 ausgebildet, die in Fig. 3 durch eine graue Schattierung angedeutet ist. Diese Gleitschicht 20 ist vorzugsweise auf Sulfid-, Selenid- oder Tellurid-Basis hergestellt und weist somit gewisse Schmiereigenschaften auf, die im folgenden noch näher erläutert werden. Die Gleitschicht 20 erstreckt sich nicht über das gesamte Schneidteil 2 sondern endet in einem Abstand vor den Hauptschneiden 8, 9, so daß diese durch die harte, verschleißfeste Grundschicht 26 gebildet sind. D.h., der eigentliche Schneidbereich des Bohrers 1 ist mit der harten Grundschicht 26 bedeckt, die beispielsweise eine Vickershärte von etwa 2000-10000 HV aufweisen kann, während die sonstigen Flächen des Schneidteils 2, die nicht unmittelbar zum Zerspanungsvorgang beitragen, mit der vergleichsweise weichen Gleitschicht 20 bedeckt sind, die beispielsweise eine Mohs-Härte von 1-2 aufweisen kann.

In besonderen Fällen kann die Gleitschicht 20 auch direkt auf dem Grundkörper aufgebracht werden, so daß dieser selbst die Grundschicht bildet.

Zur Verdeutlichung des Effekts dieser Gleitschicht 20 ist in Fig. 4 eine Schnittdarstellung einer Schneide 28 eines Schneidwerkzeuges beim Zerspanungsvorgang dargestellt. Durch die Vorschubbewegung in Pfeilrichtung wird von einem Werkstück 30 ein Span 32 abgetrennt, wobei die Schneide 28 in dem Bereich, in dem die eigentliche Zerspanung des Werkstücks 30 erfolgt, durch die harte, verschleißfeste Grundschicht 26 gebildet ist. Der Span wird entlang der Spanfläche 12 abgeführt und bewegt sich somit auf der gestrichelt angedeuteten Gleitschicht 20, die aufgrund ihrer Gleitwirkung (MoS₂...) das Rutschen des Spanes entlang der Spanfläche 12 unterstützt. Dadurch wird das Abführen des Spanes aus dem eigentlichen Zerspanungsbereich unterstützt, so daß einerseits der Span und somit auch Wärmeenergie schnell vom Werkstück abführbar ist, andererseits wird der Spanflächenverschleiß durch den besonderen Aufbau, d.h. harte Grundschicht 26 im Schneidenbereich und weiche Gleitschicht 20 im Abführbereich der Spannuten 4, 5, minimiert, und der Bildung einer Aufbauschneide vorgebeugt.

Des weiteren wird durch die Ausbildung der Gleitschicht 20 an der Freifläche 10 des Werkzeugs, dessen Reibung mit der bearbeiteten Fläche 34 des Werkstücks 30 minimiert, so daß auch der Freiflächenverschleiß im Bereich der Schneiden auf ein Minimum reduzierbar ist. Somit läßt sich durch das Vorsehen der Gleitschicht 20 der Verschleiß des Werkzeuges gegenüber herkömmlichen Werkzeugen ohne Gleitschicht 20 ganz wesentlich verringern.

Derartige Werkzeuge sind somit ganz besonders vorteilhaft bei der Trockenbearbeitung oder bei der Bearbeitung mit reduzierter Kühlmittelmenge von Leichtmetallen (Aluminium/Ma-gnesium-Legierungen) anwendbar, die in der Automobil- und Flugzeugindustrie zunehmende Bedeutung erlangt. Durch den Verzicht auf oder die Reduzierung von Kühl- und Schmiermittel lassen sich einerseits erhebliche Investitionskosten einsparen, andererseits stellt die Wiederaufbereitung oder Entsorgung derartiger Kühl/Schmiermittel ein Problem dar, das angesichts strenger Auflagen des Gesetzgebers ebenfalls einen zunehmend wichtiger werdenden Kostenfaktor darstellt.

Die Überlegenheit beschichteter Werkzeuge gegenüber unbeschichteten Werkzeugen läßt sich anhand der in Fig. 6 dargestellten Vergleichsversuche verdeutlichen. Diese Versuche wurden mit einem TiAlN-beschichteten Spiralbohrer durchgeführt, wobei die Versuche mit identischen Zerspanungsparametern (Schnittgeschwindigkeit, Vorschub, Schnittiefe) durchgeführt wurden. Die in Fig. 6 links dargestellte Versuchsreihe wurde an einem Werkstück aus AlSi9 durchgeführt, wobei mit demjenigen Werkzeug, das mit einer harten Grundschicht und einer weichen Gleitschicht versehen war (H + W) nahezu eine Verdreifachung des Standwegs erzielbar war.

Das gleiche Ergebnis wurde auch bei einer Al-Legierung mit höherem Siliziumanteil (AlSi18) erzielt, wobei zwar aufgrund der schlechteren Zerspanbarkeit dieses Materials insgesamt niedrige Werte erzielt wurden, das beschichtete Werkzeug jedoch bei ansonsten gleichen Versuchsbedingungen einen erheblich längeren Standweg aufwies.

Das heißt, durch das Vorsehen der weichen Gleitschicht auf einer harten Grundschicht oder einem harten Grundkörper eines Werkzeuges lassen sich die Standzeit und damit auch die maximal möglichen Schnittgeschwindigkeiten gegenüber herkömmlichen Werkzeugen wesentlich verbessern. Optimale Ergebnisse lassen sich erzielen, wenn das Werkzeug, wie in den Fig. 1 und 3 dargestellt, sowohl mit einem Rillenanschliff als auch mit einer weichen Gleitschicht versehen wird, wobei es in Einzelfällen vorteilhaft sein kann, nur eine der beschriebenen Verbesserungen (Rillenanschliff oder Gleitschicht) allein vorzusehen.

Bei der Ausbildung der Rillen 18 und der Ausnehmungen 14 werden Radien (Tiefen und Breiten) im Bereich von 0.01-0.5 mm vorzugsweise 0.02-0.5 mm bevorzugt. Diese Rillen 18 und Ausnehmungen 14 können beim Schleifen der Spannuten bzw. der Bohrerspitze in einem Arbeitsgang hergestellt werden, so daß keine gesonderten Schleifvorgänge und Werkzeuge zur Ausbildung der Rillen-/Ausnehmungen erforderlich sind.

Die Gleitschicht 20 wird durch Ionensputtern hergestellt, so daß diese nicht nur auf der Oberfläche der Grundschicht 26 aufgebracht wird, sondern auch teilweise in die Grundschicht eindiffundiert.

Selbstverständlich ist die Erfindung nicht auf die Anwendung bei Bohrwerkzeugen beschränkt, sondern der erfindungsgemäße Rillenanschliff und/oder die erfindungsgemäße Gleitschicht lassen sich auch bei anderen Schneidwerkzeugen, vorzugsweise mit geometrisch bestimmter Schneidfläche anwenden.

## Patentansprüche

1. Schneidwerkzeug, insbesondere Bohrer, Fräser, Gewindebohrer, Reibahle, Senker, mit einem Schaft und einem Schneidteil (2), an dem zumindest eine Schneide (8, 9; 28) zur zerspanenden Bearbeitung eines Werkstückes (30) vorgesehen ist, wobei das Schneidteil mit einer Gleitschicht (20) geringerer Härte als eine Grundschicht (26) oder ein Grundkörper (20) des Schneidteiles beschichtet ist, **dadurch gekennzeichnet, daß** die Hauptschneide (8,9) wellenförmig ausgebildet ist, indem in einer Freifläche (10) des Schneidwerkzeuges (2) und in einer Spannut (4, 5) eine Vielzahl von nebeneinanderliegenden, rillenförmigen Ausnehmungen (14) bzw. Rillen (18) ausgebildet sind.

2. Schneidwerkzeug, nach Anspruch 1, **dadurch gekennzeichnet, dass** die Gleitschicht (20) Sulfide, Selenide, Telluride, wie z.B. MoS₂, NbS₂, TaS₂, WS₂, MoSe₂, NbSe₂, TaSe₂, WSe₂, MoTe₂, NbTe₂, WTe₂ oder Mischverbindungen davon enthält.

3. Schneidwerkzeug nach Anspruch 1 oder 2, **dadurch gekennzeichnet, daß** der Grundkörper (20) des Schneidteils (2) aus HSS, Hartmetall, Cermet oder Keramik hergestellt ist.

4. Schneidwerkzeug nach einem der Ansprüche 1 bis 3, **dadurch gekennzeichnet, daß** die Grundschicht (26) aus einem keramischen Material wie TiN, TiAlN, TiCN, Diamant oder ähnlichem besteht.

5. Schneidwerkzeug nach einem der Ansprüche 1 bis 4, **dadurch gekennzeichnet, daß** die Gleitschicht (20) nicht im Bereich der Schneide (8, 9) ausgebildet ist.

6. Schneidwerkzeug nach einem der vorhergehenden Ansprüche, **dadurch gekennzeichnet, daß** die Dicke der Grundschicht (26) 1-10 µm und/oder die Dicke der Gleitschicht (20) zwischen 0.01-5 µm ist.

7. Schneidwerkzeug nach einem der vorhergehenden Ansprüche, **dadurch gekennzeichnet, daß** die Härte der Grundschicht (26) 1000 und 10000 HV, vorzugsweise 2000-4000 HV ist und/oder die Gleitschicht (20) eine Mohs-Härte von 1-2 hat.

8. Schneidwerkzeug nach einem der vorhergehenden Ansprüche, **dadurch gekennzeichnet, daß** in einer Freifläche (10) des Schneidwerkzeugs (2) eine Vielzahl von nebeneinanderliegenden, rillenförmigen Ausnehmungen (14) ausgebildet ist, die sich von der Schneide (8, 9) weg, hin zu einer Hinterkante (16) der Freifläche (14) erstrecken.

9. Schneidwerkzeug nach Anspruch 8, **dadurch gekennzeichnet, daß** die Schneide (8, 9) an der Stirnseite des Schneidteils (2) ausgebildet ist, und daß die Ausnehmungen (14) etwa konzentrisch zur Schneidwerkzeugachse (27) angeordnet sind.

10. Schneidwerkzeug nach Anspruch 9, **dadurch gekennzeichnet, daß** die Ausnehmungen (14) Kreis- oder Spiralabschnitte sind.

11. Schneidwerkzeug nach einem der vorhergehenden Ansprüche, **dadurch gekennzeichnet, daß** die Rillen (18) derart ausgebildet sind, dass ihre Achse vorzugsweise etwa parallel zur Achse der Spannut (4, 5) verläuft.

12. Schneidwerkzeug nach Anspruch 11, **dadurch gekennzeichnet, daß** die Rillen (18) und Ausnehmungen (14) einen etwa wellenförmigen Querschnitt haben.

13. Schneidwerkzeug nach Anspruch 11 oder 12, **dadurch gekennzeichnet, daß** jeweils einer Rille (18) eine Ausnehmung (14) zugeordnet ist, die in Verlängerung der Rille (18) verläuft.

14. Schneidwerkzeug nach einem der Ansprüche 1 bis 13, **dadurch gekennzeichnet, daß** sich die Rillen (18) und Ausnehmungen (14) von der Hauptschneide (8, 9) weg lediglich über einen Teilbereich der Spannut (4, 5) bzw. der Freifläche (10) erstrecken.

15. Schneidwerkzeug nach einem der Ansprüche 1 bis 14, **dadurch gekennzeichnet, daß** die Breite und Tiefe der Rillen (18) bzw. der Ausnehmungen (14) 0.01-2 mm, vorzugsweise 0.02-0.5 mm beträgt.

## Claims

1. A cutting tool, especially a drill, milling cutter, screw tap, reamer, core drill, comprising a shaft and a cutting member (2) on which at least one cutting edge (8, 9; 28) for machining a workpiece (30) is provided, wherein said cutting member is coated with a slide layer (20) having a lower hardness than a base layer (26) or a base body (20) of said cutting member, **characterized in that** said cutting edge (8, 9) has an undulated shape **in that** a plurality of adjacent, groove-like recesses (14) or grooves (18) are formed in an open face (10) of the cutting tool (2) and in a flute (4, 5).

2. A cutting tool according to claim 1, **characterized in that** said slide layer base layer (20) contains sulfides, selenides, tellurides, such as, e.g., MoS₂, NbS₂, TaS₂, WS₂, MoSe₂, NbSe₂, TaSe₂, WSe₂, MoTe₂, NbTe₂, WTe₂ or mixed compounds thereof.

3. A cutting tool according to claim 1 or 2, **characterized in that** said base body (20) of said cutting member (2) is manufactured of HSS, hard metal, cermet or ceramic material.

4. A cutting tool according to any one of claims 1 to 3, **characterized in that** said base layer (26) consists of a ceramic material such as TiN, TiAlN, TiCN, diamond or the like.

5. A cutting tool according to any one of claims 1 to 4, **characterized in that** said slide layer (20) is not provided in the area of the cutting edge (8, 9).

6. A cutting tool according to any one of the preceding claims, **characterized in that** the thickness of said base layer (26) is 1-10 µm and/or the thickness of said slide layer (20) is between 0.01-5 µm.

7. A cutting tool according to any one of the preceding claims, **characterized in that** the hardness of said base layer (26) is between 1000 and 10000 HV, preferably 2000-4000 HV and/or said slide layer (20) has a Mohs' hardness of 1-2.

8. A cutting tool according to any one of the preceding claims, **characterized in that** in an open face (10) of said cutting member (2) a plurality of adjacent groove-like recesses (14) extending away from said cutting edge (8, 9) to a rear edge (16) of said open face (10) is provided.

9. A cutting tool according to claim 8, **characterized in that** said cutting edge (8, 9) is formed at the front of said cutting member (2) and that said recesses (14) are positioned approximately concentrically with respect to the axis (27) of the cutting tool.

10. A cutting tool according to claim 9, **characterized in that** said recesses (14) are segments of a circle or spiral.

11. A cutting tool according to any one of the preceding claims, **characterized in that** said grooves (18) are formed such that their axes preferably extend approximately in parallel to the axis of said flute (4, 5).

12. A cutting tool according to claim 11, **characterized in that** said grooves (18) and/or recesses (14) have an approximately undulated cross-section.

13. A cutting tool according to one of the claims 11 or 12, **characterized in that** each groove (18) is associated with a recess (14) arranged in extension of said groove (18).

14. A cutting tool according to any one of claims 1 to 13, **characterized in that** said grooves (18) and recesses (14) extend away from said main cutting edge (8, 9) merely over a partial area of said flute (4, 5) and said open face (10), respectively.

15. A cutting tool according to any one of claims 1 to 14, **characterized in that** the width and depth of said grooves (18) and/or said recesses (14) is 0.01-2 mm, preferably 0.02-0.5 mm.

## Revendications

1. Outil de coupe, notamment foret, fraise, taraud, alésoir, foret aléseur, comportant une tige et une partie de coupe (2), sur laquelle est prévu au moins un tranchant (8, 9;28) pour l'usinage avec formation de copeaux, d'une pièce à usiner (30), la partie de coupe étant recouverte par une couche favorisant le glissement (20) ayant une dureté inférieure à celle d'une couche de base (26) ou d'un corps de base (20) de la partie de coupe, **caractérisé en ce que** le tranchant principal (8, 9) a une forme ondulée par le fait que dans une surface dégagée (10) de l'outil de coupe (2) et dans une rainure (4, 5) de passage des copeaux, est formée une multiplicité d'évidements en forme de rainures (14) ou de rainures (18), disposés côte-à-côte.

2. Outil de coupe selon la revendication 1, **caractérisé en ce que** la couche favorisant le glissement (20) contient des sulfures, des séléniures, des tellures, tels que par exemple MoS₂, TaS₂, WS₂, MoSe₂, NbSe₂, TaSe₂, Wse₂, MoTe₂, NbTe₂, Wte₂ ou des composés mixtes.

3. Outil de coupe selon la revendication 1 ou 2, **caractérisé en ce que** le corps de base (20) de la partie de coupe (2) est réalisé en HSS, en un métal dur, en un cermet ou en une céramique.

4. Outil de coupe selon l'une des revendications 1 à 3, **caractérisé en ce que** la couche de base (26) est constituée par un matériau céramique tel que TiN, TiA1N, TiCN, du diamant ou analogue.

5. Outil de coupe selon l'une des revendications 1 à 4, **caractérisé en ce que** la couche favorisant le glissement (20) n'est pas formée dans la zone du tranchant (8, 9).

6. Outil de coupe selon l'une des revendications précédentes, **caractérisé en ce que** l'épaisseur de la couche de base (26) est égale à 1-10 µm et/ou que l'épaisseur de la couche favorisant le glissement (20) est comprise entre 0,01 et 5 µm.

7. Outil de coupe selon l'une des revendications précédentes, **caractérisé en ce que** la dureté de la couche de base (26) est comprise entre 1000 et 10000 HV et de préférence entre 2000 et 4000 HV et/ou que la couche favorisant le glissement (20) possède une dureté Mohs comprise entre 1 et 2.

8. Outil de coupe selon l'une des revendications précédentes, **caractérisé en ce que** dans une surface dégagée (10) de l'outil de coupe (2) est formée une multiplicité d'évidements en forme de rainures (14), disposés côte à côte, qui s'écartent du tranchant (8, 9) en direction d'un bord arrière (16) de la surface dégagée (14).

9. Outil de coupe selon la revendication 8, **caractérisé en ce que** le tranchant (8, 9) est formé sur la face frontale de l'outil de coupe (2) et que les évidements (14) sont disposés approximativement concentriquement par rapport à l'axe (27) de l'outil de coupe.

10. Outil de coupe selon la revendication 9, **caractérisé en ce que** les évidements (14) sont des sections de cercle ou de spirales.

11. Outil de coupe selon l'une des revendications précédentes, **caractérisé en ce que** les rainures (18) sont agencées de telle sorte que leur axe est de préférence approximativement parallèle à l'axe de la rainure (4, 5) de passage des copeaux.

12. Outil de coupe selon la revendication 11, **caractérisé en ce que** les rainures (18) et les évidements (14) possèdent une section transversale de forme approximativement ondulée.

13. Outil de coupe selon la revendication 11 ou 12, **caractérisé en ce que** respectivement une rainure (18) est associé un évidement (14), qui s'étend dans le prolongement de la rainure (18).

14. Outil de coupe selon l'une des revendications 1 à 13, **caractérisé en ce que** les rainures (18) et les évidements (14) s'étendent, en s'écartant du tranchant principal (8, 9), uniquement sur une zone partielle de la rainure (4, 5) de passage des copeaux ou de la surface dégagée (10).

15. Outil de coupe selon l'une des revendications 1 à 14, **caractérisé en ce que** la largeur et la profondeur des rainures (18) et des évidements (14) est comprise entre 0,01 et 2 mm et de préférence entre 0,02 et 0,5 mm.
